# EUROPEAN PATENT APPLICATION

(11) **EP 0 759 593 A2**
(43) Date of publication of application: **26.02.1997**
(21) Application number: 96113379.0
(22) Date of filing: 21.08.1996
(51) Int. Cl.: G06F 13/40

(54) **Interface device between a RS232 port and an I2C bus and method using the same**

(30) Priority: 22.08.1995 SE 9502899
(71) Applicant: Iderup, Mats, 226 55 Lund (SE)
(72) Inventor: Iderup, Mats, 226 55 Lund (SE)
(74) Representative: Baronetzky, Klaus, Dipl.-Ing.

(57) **Abstract**

A method and a device for a transfer of data in both directions between a computer having a RS-232 serial interface and an electric unit having an I²C serial interface with a data line (SDA) and a clock line (SCL). A first handshake line (CTS) of the computer interface is connected to the data line (SDA) of the electric unit through a transducer (11), and a second handshake line (RTS) of the computer interface is connected to the data line (SDA) of the unit through said transducer (11). A third handshake line (DTR) of the computer interface is connected to the clock line (SCL) of the unit through said transducer (11).

The handshake lines (RTS, DTR) of the computer are toggled between a first state and a second state to make the data line (SDA) and the clock line (SCL) change between two states (LOW, HIGH) to transfer data bit by bit from the computer to the electric unit (1') and to clock said electric unit (1').

The state of a second handshake line (CTS) of the computer is repeatedly polled to transfer data bit by bit from the electric unit (1') to the computer through said data line (SDA).

## Description

### Technical field

The invention relates to a method and a device for a transfer of data between a computer having a RS-232 serial interface and an electric unit having an I²C serial interface with one data line and one clock line. Said electric unit can be an integrated teletext data decoder and said computer can be a conventional computer having software installed for gathering and showing the text data.

### Prior art

Systems exist that allow conventional personal computers to record, gather and show data that are transmitted through existing teletext systems. In such applications commercially available integrated teletext data decoders, such as the circuit SAA5246 from Philips Semiconductors, are used to extract teletext data information from a received video signal.

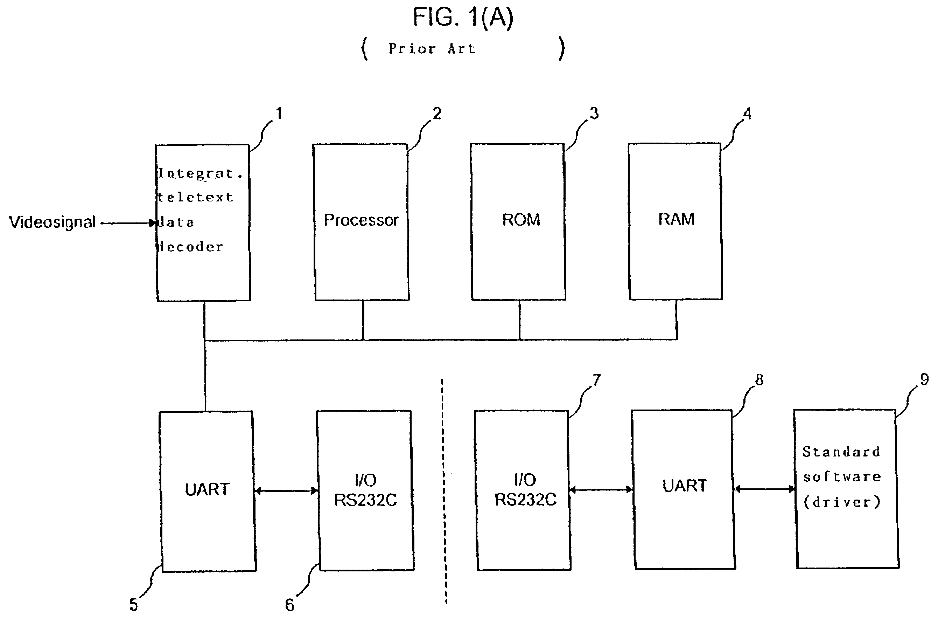

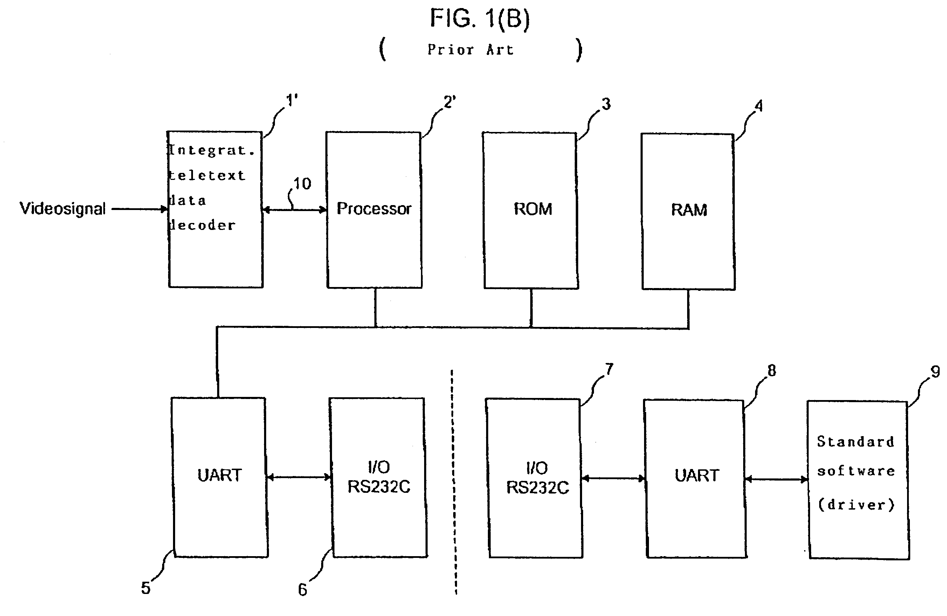

Such a system is disclosed in US-A-4 803 551. A teletext data decoder is connected in parallel to an in/out unit through processing means. The system is intended to be connected through said in/out unit to a conventional personal computer through a RS-232C interface. Incoming data are processed to be adapted to such an interface in said processing unit comprising a processor (CPU) and memories (RAM and ROM). Such a system is also described with reference to Fig. 1(A).

The teletext data decoder can also be connected to an I²C serial interface developed by Philips. A system of this type is shown with reference to Fig. 1(B).

According to prior art systems the teletext data decoder is connected either through an add on card having a video input to the computer, or through an external device connected through the serial interface (RS232-C) of the computer. Both types may also include a complete TV-receiver. In that case there is provided an antenna input on the card.

In these cases application programs in the computer for processing videotext data can communicate with the teletext data decoder through conventional driver programs. When it comes to external devices driver programs for communication through the serial connection (RS-232C) are used.

The processing means that are required according to prior art technique for the connection of a teletext data decoder to a computer through the serial interface (RS-232C) of the computer result in a substantial increase in price because a larger number of components and a separate box or cover are required. Also the embodiment using a card will result in comparatively high costs and puts demand on further assembly work.

### Disclosure of the invention

An object of the invention is to provide a method and a device for the transfer of data in both directions between a computer having a RS-232 serial interface and an electric unit having an I²C serial interface including a data line (SDA) and a clock line (SCL), any required hardware being uncomplicated and cheap. The electric unit may e.g. be an integrated teletext data decoder. The object has been achieved as a result of the features included in claims 1 and 5, respectively.

A transducer having very few components is connected between said electric unit and said serial output of the computer through a conventional signal buffer (line driver). Only handshake lines of the serial interface (CTS, RTS, DTR) are used for the communication, and therefore a separate drive routine is required in the computer.

Further features of the invention are shown in the description below and the dependent patent claims.

### Brief description of drawings

The invention will now be described in more detail by practical embodiments, reference being made to the accompanying drawings, in which
- Fig. 1(A): is a block diagram showing a prior art system having a bus connection of a teletext data decoder,
- Fig. 1(B): is a block diagram showing a system of a prior art system having a serial connection of a teletext data decoder,
- Fig. 2: is a block diagram showing en embodiment of the device according to the invention,
- Fig. 3: is a basic circuit diagram of the embodiment shown in Fig. 2, and
- Fig. 4(A)-Fig. 4(F): are flow diagrams showing the basic program flow in a drive routine for the communication between a computer and a I²C type interface.

### Description

Fig. 1(A) shows a prior art teletext system according to which an integrated teletext decoder 1 is connected to a processing unit through a bus line, said unit comprising a processor 2, a first memory ROM 3 and a second memory RAM 4. An input of the teletext data decoder 1 is connected to a video signal source. A communication circuit 5 (UART) and an input/output unit 6 allows communication to a conventional personal computer through a RS232C type serial interface. The personal computer is provided with a corresponding input/output unit 7 and a communication circuit 8. Besides an application software in the computer for gathering, storing and showing teletext information a conventional drive routine 9 is used for the communication as such through said serial interface.

Fig. 1(B) shows an alternative prior art embodiment, the only difference being that an integrated teletext data decoder 1' is connected through a serial bus 10 (I²C) to a processor 2', the teletext data decoder 1' as well as the processor 2' being provided with serial interfaces. In other aspects the embodiment is identical to the embodiment shown in Fig. 1(A).

In both embodiments shown in Fig. 1(A) and Fig. 1(B) there are required a separate processing unit to provide the communication between the teletext data decoder and the computer. Said processing unit includes costly hardware but will allow use of conventional drive routine in the computer.

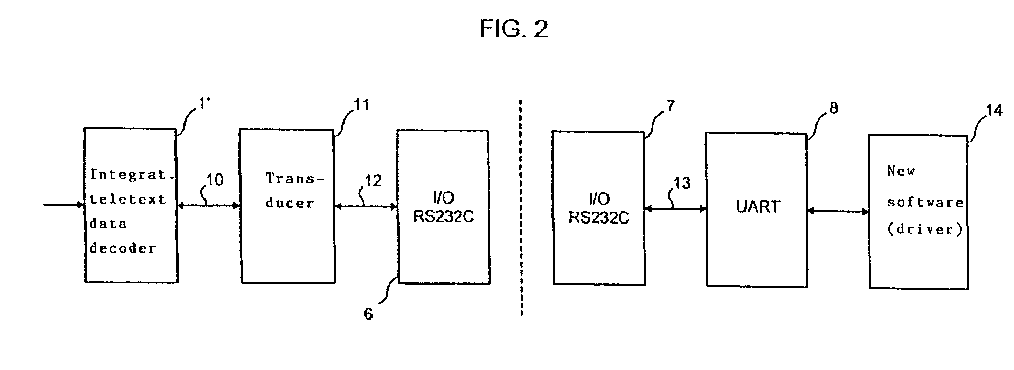

Fig. 2 shows a basic block diagram of a preferred embodiment of a device according to the invention. An electric unit 1', formed in the embodiment shown by an integrated teletext data decoder, has a serial I²C interface and is connected through a serial I²C bus 10 and a transducer 11 to an input/output unit 6 having conventional signal buffers. On the computer side there is provided an input/output unit 7 and a communication circuit 8 as disclosed above. However, in this embodiment the input/output unit 7 is functionally connected to said communication circuit 8 through handshake lines 13 and not through data lines as in conventional solutions. A separate drive routine 14 is provided in the computer to accomplish anyhow the control of the teletext data decoder 1' and the transfer of data from it to an application software in the computer.

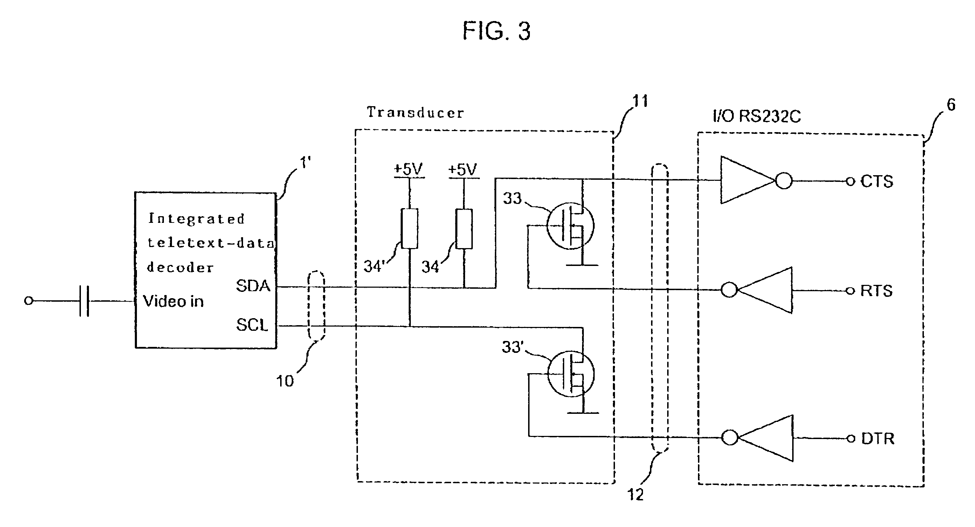

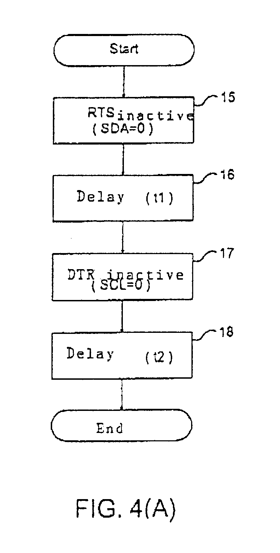

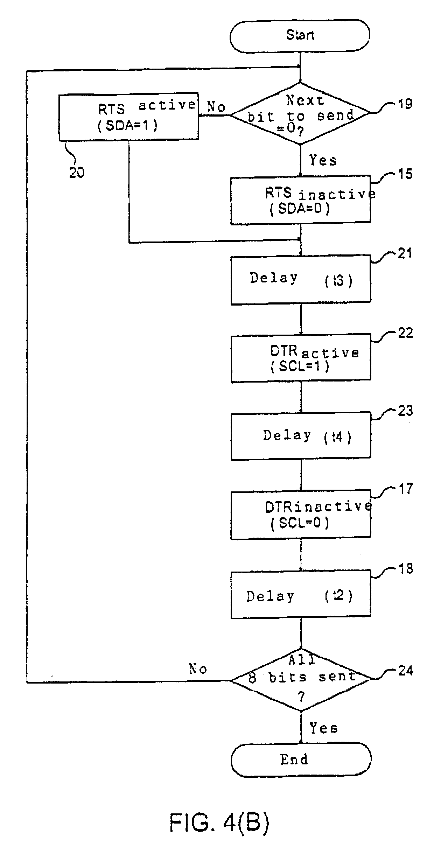

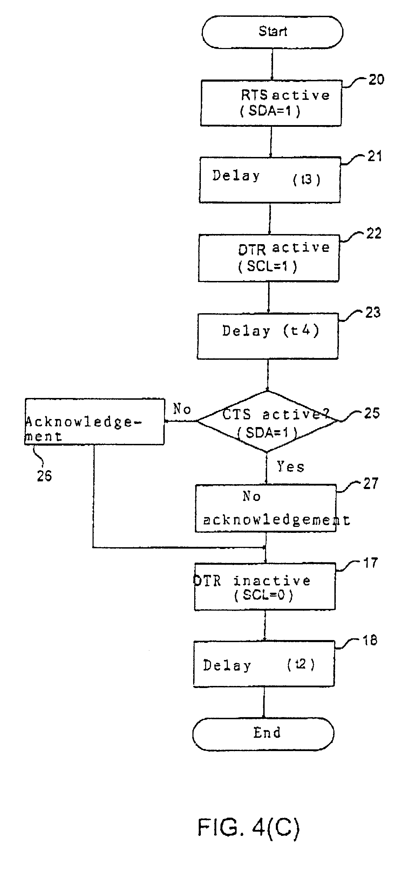

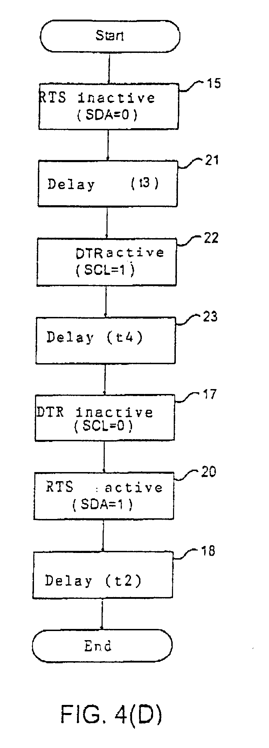

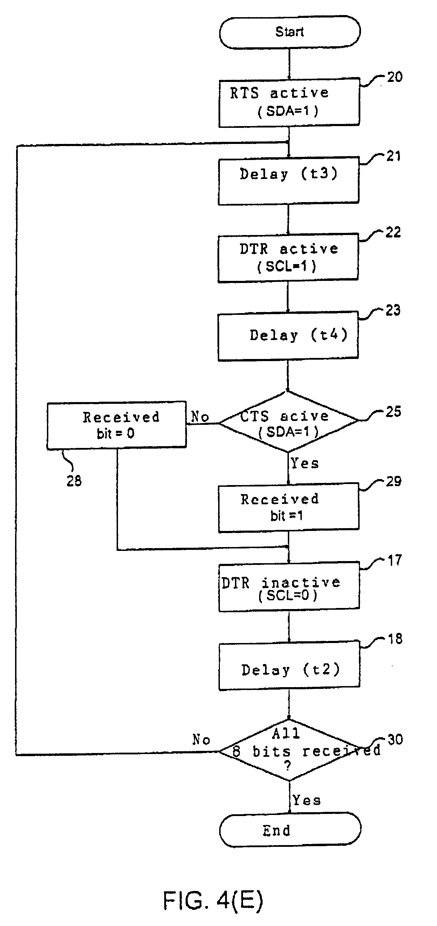

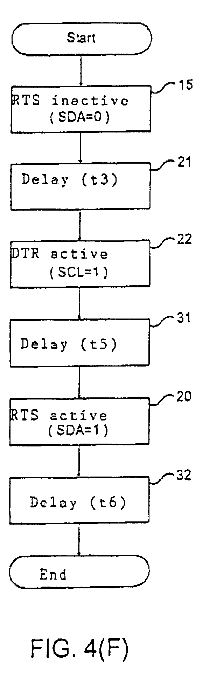

The circuit diagram of Fig. 3 shows the basic embodiment of the transducer 11. The separate drive routines that are used to communicate through said transducer 11 are disclosed in the description below, reference being made to Fig. 4(A)-4(F). Two serial lines 10, SDA (data line) and SCL (clock line) of the teletext data decoder 1' are connected separately through resistors 34 to the power supply, in this case +5 Volt. The resistors are provided to pull said lines to the reference voltage by a so called "pull up" to make it possible to put said lines SDA and SCL into two different states, HIGH and LOW. Said lines SDA and SCL are also connected to signal ground through a first switch element 33 and a second switch element 33'. Said switch elements 33 and 33' are provided as FET-transistors in the shown embodiment. Also other types of switch elements can be used. Their function is to connect by a low resistance the lines of the decoder to ground in dependence of a control signal in a control input, the gate in the shown embodiment. The serial line SDA is connected also to an output of said transducer 11. The output is connected to a first handshake line CTS of the computer through handshake lines 12 of the input/output unit 6.

A second handshake line RTS of the computer is connected to the control input of said first switch element 33 so as to transfer data signals and some types of control signals from the computer to the teletext data decoder 1' so as to put the SDA line into the state HIGH when the RTS signal of the computer is activated. This state is processed in a conventional way according to the internal logic of the teletext data decoder.

According to the interface used, I²C, the electric unit is assumed to receive clock signals from an external unit, in this case the computer. Therefore, the serial output of the computer DTR is connected through the input/output unit 6 to the control input of the second switch element 33' so as to put the SCL line into the state HIGH when the DTR line is activated.

Fig. 4(A) shows in a flow diagram the process in the drive routine in the computer when a data transfer between the electric unit and the computer is initiated. This course of events means that the I²C unit is put into a state called START. In block 15 the RTS output is made inactive which according to Fig. 3 means that the SDA line is put into the state LOW (corresponds to a logical 0). Then, in block 16 there is a time delay of t₁. The length of t₁ is determined by specifications of the I²C interface. According to present specifications, t₁ is at least 5 µs, if the unit is operating in STANDARD MODE, and at least 1 µs, if the unit is operating in FAST MODE. After the time delay the DTR output is made inactive in block 17 which according to Fig. 3 will put SCL line into the state LOW (corresponds to a logical 0). Then, in block 18 there is a further delay this time of an interval t₂. According to present specifications, t₂ is at least 4,5 µs if the unit is operating in STANDARD MODE, and at least 1,3 µs if the unit is operating in FAST MODE. After these steps the I²C unit is put into a start mode (START).

Fig. 4(B) shows those steps the drive routine will pass through when 8 bits of data are transferred from the computer to the I²C unit 1'. These steps will be executed only after the steps according to Fig. 4(A) have been taken. In block 19 the drive routine will control if the next bit to be transmitted from the computer is equal to zero (0). If this is not the case, i.e. the next bit is equal to one (1) the RTS output is made active in block 20 which means that the SDA line is put into the state HIGH (1). Then the routine will continue with block 21 as described below. However, if the next bit to be transmitted is equal to zero (0) the RTS output is made inactive in block 15 which means that the SDA line is put into the state LOW (0). Then, in block 21 there is a delay of the process. The delay lasts during the time interval t₃. According to present specifications t₃ is at least 0,5 µs if the device is operating in STANDARD MODE, and at least 0,2 µs if the device is operating in FAST MODE.

Then there are a few steps to clock the I²C unit 1'. In block 22 the DTR output is made active which means that the SCL line is put into the state HIGH (1). After a time delay in block 23 a time interval t₄ the DTR output is made inactive in block 17 (the same function which is performed according to Fig. 4(A)), which means that the SCL line is put into the state LOW (0). According to present specifications t₄ is at least 5 µs, if the unit is operating in STANDARD MODE, and at least 1 µs, if the unit is operating in FAST MODE.

After a further delay of t₂ in block 18 it is checked in block 24 if all bits to be transferred indeed have been transferred. If this is not the case the program flow will return to block 19 to transfer next data bit. However, if all bits have been transferred the routine is stopped.

Fig. 4(C) shows those steps executed by the drive routine when a confirmation is received from the I²C unit. In a first step 20 the RTS output is made active which means that the SDA line is put into the state HIGH (1). Then, in block 21, there is a delay of the process during a time interval t₃ before the DTR output is made active which means that the SCL line is put into the state HIGH (1). After a delay in block 23 during a time interval t₄ there is checked in clock 25 if the CTS line is active which is the case when the SDA line is in the state HIGH (1). If the CTS line is not active then according to block 26 a confirmation has been received. However, if the CTS line is active it is decided in block 27 that no confirmation has been received. In the next block 17 the DTR output is made inactive, which according to Fig. 3 means that the SCL line is put into the state LOW (corresponds to a logical 0). Finally, in block 18 there is a further delay during a time interval t₂.

Fig. 4(D) shows the process during transmission of a confirmation from the computer to said unit. In block 15 the RTS output is made inactive which according to Fig. 3 means that the SDA line is put into the state LOW (corresponds to a logical 0). Then, in block 21, there is a delay of t₃. Then some steps follow to clock the I²C unit 1'. In block 22 the DTR output is made active which means that the SCL line is put into the state HIGH (1). After a delay in block 23 a time interval t₄ the DTR output is made inactive in block 17 (the same function as according to Fig. 4(A)), which means that the SCL line is put into the state LOW (0). The RTS output is made active in block 20 to put the SDA line into the state HIGH, and then the routine is ended by a delay t₂ in block 18.

Fig. 4(E) shows the process during reception of one byte (8 bits) data from the I²C unit 1'. In a first step 20 the RTS output is made active which means that the SDA line is put into the state HIGH (1). Then, in block 21, there is a delay of the process during the time interval t₃, before the DTR output is made active which means that the SCL line is put into the state HIGH (1). After a delay of the time interval t₄ in block 23 there is checked in block 25 whether the CTS line is active which is the case when the SDA line is in the state HIGH (1). If the CTS line is not active it is determined by the block 28 that the received bit is a zero (0). Then the routine continues through the block 17 as described below. However, if the CTS line is active it is determined through block 29 that the bit received is a one (1).

In a following block 17 the DTR output is made inactive which according to Fig. 3 means that the SCL line is put into the state LOW (corresponds to a logic 0). In block 18 there is a further delay of a time interval t₂. Steps 21 to and including step 18 as described above are run through for each transferred bit, and the loop is ended by block 30. In said block it is checked if all, i.e. in the embodiment shown 8, bits have been received. If this is not the case the process will return through the loop to block 21 with a further delay. If all bits have been transferred the routine is stopped.

A last subroutine shown by flow diagrams appears in Fig. 4(F). This subroutine results in the I²C unit 1' being put into a state referred to as STOP. In block 15 the RTS output is made inactive which according to Fig. 3 means that the SDA line is put into the state LOW (corresponds to a logic zero). Then, in block 21, there is a delay of the process. The delay will last during the time interval t₃. In block 22 the DTR output is made active which means that the SCL line is put into the state HIGH (2). In block 22 the DTR output is made active which means that the SCL line is put into the state HIGH (1). After a delay of a time interval t₅ in block 31 the RTS output is made active in block 20 to put the SDA line into the state HIGH, and then the routine is ended by a delay of at time interval t₆ in block 32. According to present specifications t₅ is at least 4 µs, if the unit operates in STANDARD MODE, and at least 0,6 µs, if the device operates in FAST MODE. The delay t₆ is at least 5 µs, if the device operates in STANDARD MODE, and at least 1,5 µs, if the device operates in FAST MODE.

The design of the transducer 11 having an I²C bus connection as a connection line to an I²C unit 1' and having a connection line through handshake lines CTS, RTS and DTR to a conventional personal computer will allow more communication than is apparent from the routines described above. By connecting further handshake lines it will be possible, e.g. to accomplish clock synchronization and separation of a plurality of control units by further drive routines.

The hardware required according to the embodiment of Fig. 3 is preferably built into a cover, the external shape thereof being adapted to contact means for connecting to a video cassette recorder, TV or a computer. Suitable contact means are so called SCART contacts or DSUB connectors.

The power supply required to the transducer is conveniently made from an available terminal of the computer. Contact means used for connecting the keyboard with the computer comprises contact elements for a voltage supply to the keyboard and may be appropriate to use.

## Claims

1. Device for transfer of data in both directions between a computer having a RS-232 serial interface and an electric unit having an I²C serial interface with a data line ( SDA) and a clock line (SCL),
**characterized in**
that a first handshake line (CTS) of the interface of the computer is connected to a data line (SDA) of the electric unit through a transducer (11),
that a second handshake line (RTS) of the interface of the computer is connected to a data line (SDA) of the electric unit through said transducer (11), and
that a third handshake line (DTR) of the computer interface is connected to a clock line (SCL) of the electric unit through said transducer (11).

2. Device according to Claim 1, **characterized in that** said electric unit comprises a teletext data decoder.

3. Device according to Claim 1, **characterized in that** said transducer (11) comprises:
a) a first terminal connected to a power supply through a first resistor (34) and to signal ground through a first switch element (33) for a connection to a data line (SDA) of said electric unit,
b) a second terminal connected to a power supply through a second resistor (34') and to signal ground through a second switch element (33') for a connection to the clock line (SCL) of said electric unit,
c) a third terminal connected to said first terminal for a connection to said first handshake line (CTS) of the computer interface,
d) a fourth terminal connected to a control input of said first switch element (33) for a connection of said first terminal to signal ground, said fourth terminal being connectable to said second handshake line (RTS) of the computer interface, and
e) a fifth terminal connected to a control input of said second switch element (33') to connect said second terminal to signal ground, said fifth terminal being connectable to said third handshake line (DTR) of the computer interface.

4. Device according to claim 3, **characterized in**
that said third terminal is connected to said first handshake line (CTS) of the computer interface through a first element of a signal buffer (6),
that said second handshake line (RTS) of the computer interface is connected to said fourth terminal through a second element of said signal buffer (6) and
that said third handshake line (DTR) of the computer interface is connected to said fifth terminal through a third element of said signal buffer (6).

5. A method of by-directional communication between a computer having a RS-232 serial interface (16) with three handshake lines (RTS, CTS, DTR) and an electric unit (1') having an I²C serial interface (10) with a data line (SDA) and a clock line (SCL), said lines being capable of having a first state (LOW) and a second state (HIGH), **characterized**
by switching a first handshake line (RTS) of the computer to and from a first state and a second state to make said data line (SDA) to change to and from said first state (LOW) and said second state (HIGH) to transfer data bit by bit from said computer to said electric unit (1'),
by repeatedly polling the state of a second handshake line (CTS) of the computer for receiving data bit by bit from said electric unit (1') through the data line (SDA) switching between the first state (LOW) and the second state (HIGH) in dependence of the value of the data bit that is transferred, and
by making a third handshake line (DTR) of the computer change between a first state and a second state to bring the clock line (SCL) to change between the first state (LOW) and the second state (HIGH) so as to clock said electric unit (1').

6. A method according to claim 5, **characterized**
by initiating the communication by putting the first handshake line (RTS) of the computer into an inactive state to put the data line (SDA) into the first state (LOW), the third data line (DTR) of the computer then being put into an inactive state after a delay to make the clock line (SCL) switch into the first state (LOW).
